# EUROPEAN PATENT SPECIFICATION

(11) **EP 3 942 134 B1**
(45) Date of publication and mention of the grant of the patent: **04.11.2026**
(21) Application number: 20773958.2
(22) Date of filing: 19.03.2020
(51) Int. Cl.: E05D 1/00, F16B 12/24, A47C 4/28, A47C 4/30

(54) **AN INTEGRATED HINGE FOR FURNITURE**
INTEGRIERTES SCHARNIER FÜR MÖBELSTÜCK
CHARNIÈRE INTÉGRÉE POUR MEUBLES

(30) Priority: 19.03.2019 HK 19121204
(43) Date of publication of application: 26.01.2022
(73) Proprietor: Chu, Chen Ying Paulina, Kowloon, Hong Kong (HK)
(72) Inventor: GOORIS, Frederic Frans Petrus, Kowloon, Hong Kong (CN); POZZATO, Francesco, Kowloon, Hong Kong (CN); CHU, Chen Ying Paulina, Kowloon, Hong Kong (CN)
(74) Representative: dompatent
(86) International application number: PCT/CN2020/080195
(87) International publication number: WO 2020/187290

(56) References cited:
- EP-A1- 1 287 776
- EP-A1- 1 464 784
- CN-A- 1 144 514
- DE-U1- 202011 000 882
- FR-B1- 2 609 306
- US-A1- 2004 078 890
- US-B1- 8 434 196
- US-B1- 8 434 196
- US-B1- 8 833 000
- US-B2- 7 278 245

## Description

### Field of the Invention:

The present invention generally relates to furniture and the manufacture thereof. More specifically, the present invention relates to transformable, portable, and foldable furniture.

### Background:

As modern urban living quarters are becoming smaller and smaller, transformable furniture are gaining popularity as one piece of space-saving furniture may serve different functions depending on its configuration. Most transformable furniture, such as a coffee-dining convertible table, usually have moving parts to enable a flexible structure. Similarly, portable furniture that can be stowed away for easy storage and transportation incorporate at least some form of foldable or collapsible assembly to enable shrinking and shapeshifting. These assemblies are often implemented by using mechanical hinges and joints connecting furniture articles such as beams and panels. For example, US7278245B2 discloses a radial-hinge mechanism including elongated members arranged and interconnected into a closed-loop assembly that resembles a multi-point star when in its fully-closed mode. For another example, US8833000B1 represents the closest prior art and discloses a tensegrity structure with one or more tensegrity units formed by a membrane in combination with three or more elongate compression members obliquely disposed in a spiral relationship in compression within the membrane. However, furniture constructed from these assemblies demand higher construction complexity and number of components than conventional furniture, and these in turn translate to higher manufacturing and material costs, and also likely overall weight increase.

Therefore, there is an unmet need for a method and apparatus for constructing transformable and portable furniture that are structurally flexible, simple in construction, and light in weight.

### Summary of the Invention:

One of the objectives of the present invention is to provide an apparatus for constructing a transformable and/or portable furniture that is structurally flexible, simple in construction, and light in weight based on integrated hinges connecting articles of the furniture assembly. Each of the integrated hinges comprises a rigid structure enclosed within a three dimensional (3D) flexible membrane that contour around the rigid structure.

In accordance to various embodiments of the present invention, the rigid structure can be two rods arranged in a cross-shaped structure, two rods arranged in a 'V'-shaped structure, two rods arranged in a 'T'-shaped structure, three rods arranged in a three-pointed star-shaped structure, or four rods arranged in a four-pointed star-shaped structure. It will be apparent to an ordinarily-skilled person in the art that other shaped rigid structures having different number of rods for facilitating different types of movements of the connecting parts are realizable.

The shape of the multi-rod rigid structure of the various configurations is not fixed by any fixing accessory (e.g. pin, nail, screw, bearing, clamp, etc.), instead the rigid structure is wrapped tightly in the flexible membrane with its 3D contour holding the rigid structure in place. This way, the number of parts of the complete furniture can be kept minimal.

According to the invention, the rods of the rigid structure of the integrated hinge function as hinge arms. An article of the furniture assembly, such as a supporting beam, a leg, an apron, a base, a top, a deck, a door, and/or a surface panel is connected to one of the rods of the rigid structure, preferably near an end of the rod distal from the other rod(s) such that the connected articles are allowed to rotate, pivot, and/or shift in respect with one and other or the furniture main body about the rigid structure depending on the configuration of the rigid structure. A foldable or collapsible overall furniture assembly is then constructed using the plurality of integrated hinges connecting the furniture articles.

In accordance to one embodiment, the one or more integrated hinges are integrated with one or more further articles, the flexible membrane encloses the rigid structures of the hinges as well as the one or more furniture articles as one integrated piece.

In accordance to one embodiment, the flexible membrane is made of elastic material such that the integrated hinge serves as a spring hinge with a biased position. The furniture assembly incorporating the integrated hinges and elastic flexible membrane is able to provide a default configuration without the use of any locking mechanism.

In accordance to one exemplary application, provided is a collapsible infant cradle constructed using a number of integrated hinges, each having a cross-shaped rigid structure. In accordance to another exemplary application, a foldable booster seat is provided, which is constructed using a number of integrated hinges of different shaped rigid structures. It will be apparent to an ordinarily-skilled person in the art that other applications incorporating the integrated hinges in their constructions are realizable.

### Brief Description of the Drawings:

Embodiments of the invention are described in more detail hereinafter with reference to the drawings, in which:
FIG. 1A depicts an integrated hinge having a cross rigid structure used in an embodiment of the present invention;
FIG. 1B depicts an integrated hinge having a 'V'-shaped rigid structure used in an embodiment of the present invention;
FIG. 1C depicts an integrated hinge having a three-pointed star-shape rigid structure used in an embodiment of the present invention;
FIG. 2 depicts an exemplary collapsible infant cradle constructed using a plurality of integrated hinges, each having a cross shape rigid structure enhanced by piping, in accordance to an embodiment of the present invention; and
FIG. 3 depicts an integrated hinge having a single straight rod shape rigid structure used in an embodiment of the present invention.

### Detailed Description of the Invention:

In the following description, apparatuses for constructing a transformable and/or portable furniture that is structurally flexible, simple in construction, and light in weight based on integrated hinges connecting articles of the furniture assembly and the likes are set forth as preferred examples.

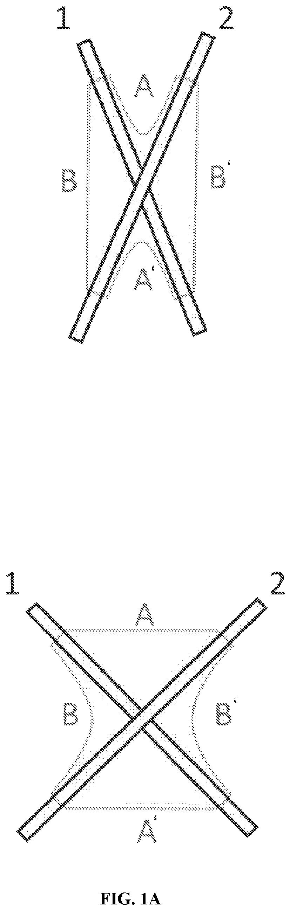

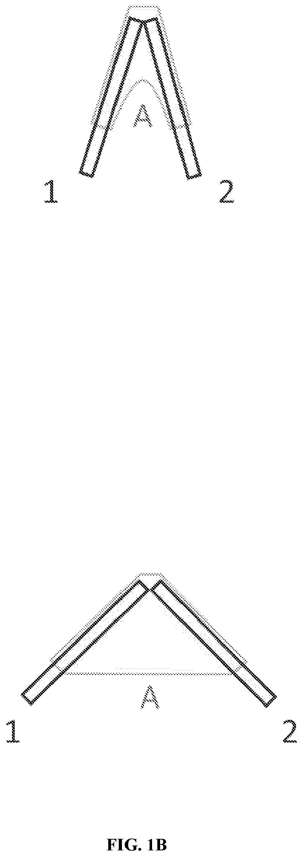

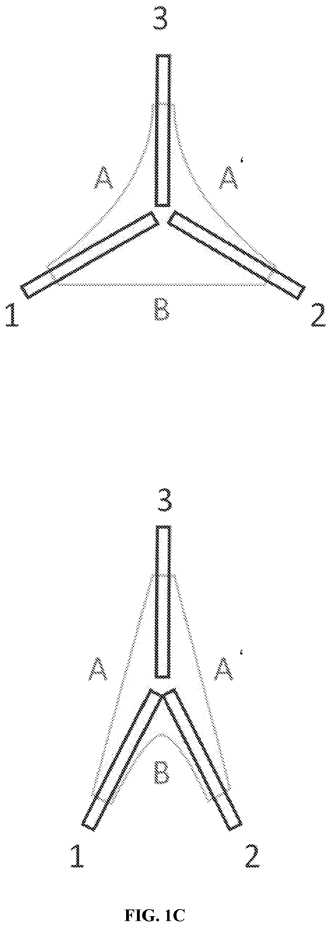

Referring to FIGs. 1A, 1B, and 1C. In accordance to various embodiments of the present invention, the rigid structure can be a structure having two rods 1 and 2 arranged in a cross-shaped structure as shown in FIG. 1A, two rods 1 and 2 arranged in a 'V'-shaped structure as shown in FIG. 1B, two rods arranged in a 'T'-shaped structure, three rods 1, 2, and 3 arranged in a three-pointed star-shaped structure as shown in FIG. 1C, or four rods arranged in a four-pointed star-shaped structure. It will be apparent to an ordinarily-skilled person in the art that other shaped rigid structures having different number of rods for facilitating different types of movements of the connecting parts are realizable.

In accordance to one embodiment, the shape of the multi-rod rigid structure of the various configurations is not fixed by any fixing accessory (e.g. pin, nail, screw, bearing, clamp, etc.), instead the rigid structure is wrapped tightly in a flexible membrane with its 3D contour holding the rigid structure in place. The 3D contour property of the flexible membrane can be achieved by using molding or 3D knitting techniques. For example as shown in FIG. 1A, the two rods 1 and 2 arranged in the cross-shaped structure are wrapped in a flexible membrane having four edges A, A', B, and B'. One of the movements of this integrated hinge is the lateral rotations of the two rods 1 and 2 in respect with each other about their intersection along the same plane. Another movement is the lateral rotation of the two rods 1 and 2 in respect with each other about their intersection along different planes. For another example as shown in FIG. 1B, the two rods 1 and 2 arranged in a 'V'-shaped structure are wrapped in a flexible membrane having at least edge A. One of the movements of this integrated hinge is the lateral pivoting of the two rods 1 and 2 about the meeting point of the ends of the two rods and along the same plane. Another movement of this integrated hinge is the 3D pivoting of the two rods 1 and 2 about the meeting point of the ends of the two rods. A 'T'-shaped or 'Y'-shaped structure is also possible with two rods. For yet another example as shown in FIG. 1C, the three rods 1, 2, and 3 arranged in the three-pointed star-shaped structure are wrapped in a flexible membrane having three edges A, A', and B.

In accordance to one embodiment, the rods of the rigid structure of the integrated hinge function as hinge arms. An article of the furniture assembly, such as a supporting beam, a leg, an apron, a base, a top, a deck, a door, and/or a surface panel is connected to one of the rods of the rigid structure, preferably at near an end of the rod distal from the other rod(s) such that the connected articles are allowed to rotate, pivot, and/or shift in respect with one and other or the furniture main body about the rigid structure depending on the configuration of the rigid structure. A foldable or collapsible overall furniture assembly is then constructed using the plurality of integrated hinges connecting the furniture articles.

In accordance to one embodiment, the one or more integrated hinges are fully integrated with one or more furniture articles, the flexible membrane encloses the rigid structures of the hinges as well as the one or more furniture articles forming one integrated piece of the overall furniture assembly.

According to the invention, the multi-rod rigid structure is fixed by inserting the rods in pipes in a piping system biasedly arranged into the desired shape. The piping system can also provide additional rigidity and/or tensile strength to the integrated hinge.

In accordance to one embodiment, the rods in the rigid structure of the integrated hinge can be made of different materials with different weights, tensile strengths, and/or stiffnesses, to enable certain controlled shape deformations, and/or weight distributions of the furniture assembly incorporating combinations of such integrated hinge(s).

According to the invention, the flexible membrane is made of elastic material such that the integrated hinge serves as a spring or a spring hinge with a biased position. This type of spring or spring hinge can also serve as a movement guide for a furniture article in guiding it back to its original position. The furniture assembly incorporating the integrated hinges and elastic flexible membrane may be able to maintain a default configuration without the use of any locking mechanism. The use of elastic flexible membrane may also provide desirable springiness to the furniture assembly of certain type of furniture such as sofas and beds. The combined use of multiple integrated hinges having mixed flexible membranes made of materials of different degrees of elasticity enable a variety of biased positions and parts' movements of the furniture assembly. In other words, the integrated hinge's behavior can be influenced by changing the membrane properties, giving more flexibility and control to the furniture functionality and design.

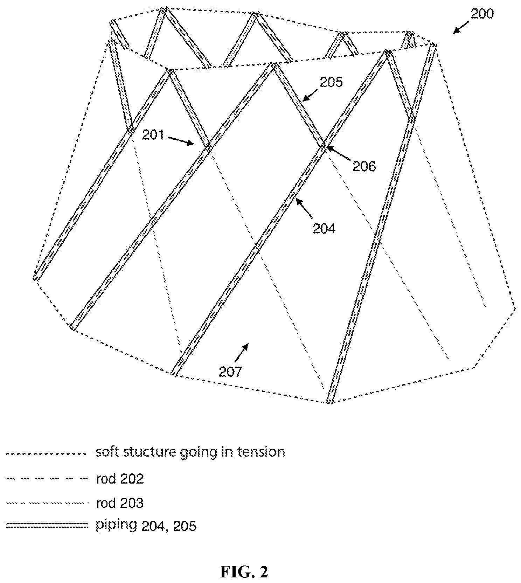

Referring to FIG. 2. In accordance to one exemplary application, provided is a collapsible infant cradle 200 constructed using a number of integrated hinges 201, each having a cross-shaped rigid structure. The two rods 202 and 203 are used to construct the cross-shaped rigid structure in each integrated hinge 201. For each of the integrated hinges 201, the entire length of rod 202 is inserted inside a long pipe 204 and a portion of rod 203 is inserted inside a short pipe 205. One end of the short pipe 205 is connected to the long pipe 204 body at joint 206 arranged biasedly into a 'y' shape. There are corresponding through-holes on the body of the long pipe 204 at joint 206 to allow rod 203, having inserted in the short pipe 205, to pass through the body of the long pipe 204, forming the intersection of the two rods 202 and 203. The piping 204 and 205 and the rods 202 and 203 together provide the frame for the membrane and form the overall structure of the infant cradle 200. The bendability of joint 206 and the elasticity of the piping 204 and 205 and the rods 202 and 203 allow the infant cradle 200 to collapse.

The membrane 207 can be a single piece 3D-knitted fabric with channels to hold in place the piping 204 and 205 and the rods 202 and 203 of the cross-shaped rigid structures of the integrated hinges 201.

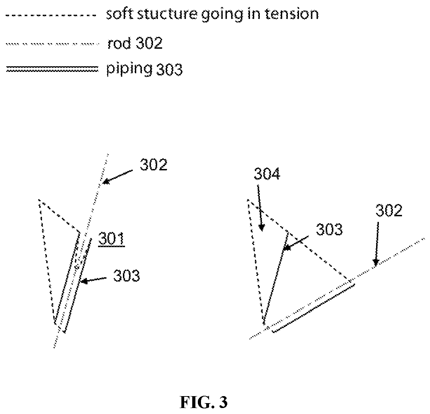

Referring to FIG. 3. In accordance to another embodiment of the present invention, an integrated hinge is provided having a single straight rod-shaped rigid structure 301 comprising a rod 302. The rod 302 is held in place in piping 303, which is made of elastic material. The piping 303 is wrapped within membrane 304. The edge of the membrane 304 distal to the piping 303 and rod 302 can be connected or fixed to another furniture article. A number of functions can be accomplished by this integrated hinge. For example, a rotational movement of the rod 302 stretches membrane 304, providing surface tension of membrane 304 and in turn the desired shape of a furniture article. With a highly flexible piping, such as that of piping 303, a number of configurations and angular movements of the rod 302 as a hinge arm can be accomplished.

Other exemplary applications include foldable booster seats, foldable chairs, collapsible sofas, strollers, and other transformable furniture constructed using integrated hinges of different shaped rigid structures. It will be apparent to an ordinarily-skilled person in the art that other transformable furniture incorporating the integrated hinges in their constructions are realizable.

The foregoing description of the present invention has been provided for the purposes of illustration and description. It is not intended to be exhaustive or to limit the invention to the precise forms disclosed. Many modifications and variations within the scope of the appended claims will be apparent to the practitioner skilled in the art.

The embodiments were chosen and described in order to best explain the principles of the invention and its practical application, thereby enabling others skilled in the art to understand the invention for various embodiments and with various modifications that are suited to the particular use contemplated. It is intended that the invention is defined by the appended claims.

## Claims

1. A transformable furniture comprising a hinge (201) and a furniture assembly, wherein the hinge (201) being configured for hingedly connecting an article of the furniture assembly to one or more articles or a main body of the furniture assembly and the hinge comprising:
a rigid structure comprising at least a first rod (202) and a second, juxtaposed rod (203), wherein each of the rods functions as a hinge arm and wherein the first and second rods are positioned to touch each other at a rod intersection, and being rotatable relative to one another at the rod intersection or meeting point;
a flexible membrane (207) configured to wrap tightly around the rigid structure including the first and second rods and the rod intersection or meeting point, the flexible membrane holding the first and second juxtaposed rods and permitting:
a first lateral rotation of the rods relative to one another about the rod intersection or meeting point along a same plane, and
a second lateral rotation of the rods relative to one another about the rod intersection or meeting point along different planes; and
wherein
the flexible membrane (207) is made of elastic material and manufactured to have a three-dimensional contour for biasedly holding the rigid structure in a default shape without use of any fixing accessory or locking mechanism; and
the flexible membrane (207) further encloses the rigid structure and at least one of the articles of the furniture assembly to form a single integrated piece of the furniture assembly;
a flexible piping (204/205) wrapped within the flexible membrane (207) and configured in a default shape to allow insertion of the first and second rods (202/203) of the rigid structure there within; and
the first rod is connected to one of the articles of the furniture assembly and the flexible membrane is connected to another one of the articles of the furniture assembly such that the connected articles are rotatable, pivot-able, or moveable in respect with one and other about the hinge; or the first rod is connected to one of the articles of the furniture assembly and the flexible membrane is connected to the main body of the furniture assembly such that the connected article is rotatable, pivot-able, or moveable in respect with the main body of the furniture assembly about the hinge.

2. The transformable furniture of claim 1,
wherein the hinge (201) functions as a spring hinge to return the hinge and first (202) and second rods (203) to the default shape in the absence of an applied force.

3. The transformable furniture of claim 2,
wherein the first and the second rods are arranged in a cross shape.

4. The transformable furniture of claim 2,
wherein the first and the second rods are arranged in a 'V' shape.

5. The transformable furniture of claim 2,
wherein the first and the second rods are arranged in a 'T' or 'Y' shape.

6. The transformable furniture of claim 2,
wherein the rigid structure further comprises a third rod, and the three rods are arranged in a three-pointed star shape.

7. The transformable furniture of claim 2,
wherein the rigid structure further comprises a third and a fourth, and the four rods are arranged in a four-pointed star shape.

## Patentansprüche

1. Umwandelbares Möbel, das ein Scharnier (201) und eine Möbelbaugruppe aufweist, wobei das Scharnier (201) zum gelenkigen Verbinden eines Elements der Möbelbaugruppe mit einem oder mehreren Elementen oder einem Hauptkörper der Möbelbaugruppe ausgebildet ist und das Scharnier aufweist:
eine starre Struktur, die mindestens einen ersten Stab (202) und einen zu diesem benachbart angeordneten zweiten Stab (203) aufweist, wobei jeder der Stäbe als Scharnierarm fungiert und wobei der erste und der zweite Stab derart positioniert sind, dass sie einander an einem Kreuzungspunkt der Stäbe berühren, und an dem Kreuzungs- oder Zusammentreffpunkt der Stäbe relativ zueinander drehbar sind;
eine flexible Membran (207), die dazu ausgebildet ist, die starre Struktur einschließlich des ersten und des zweiten Stabs und des Kreuzungs- oder Zusammentreffpunkts der Stäbe eng zu umhüllen, wobei die flexible Membran die benachbart angeordneten ersten und zweiten Stäbe hält und
eine erste seitliche Drehung der Stäbe relativ zueinander um den Kreuzungs- oder Zusammentreffpunkt der Stäbe in derselben Ebene und
eine zweite seitliche Drehung der Stäbe relativ zueinander um den Kreuzungs- oder Zusammentreffpunkt der Stäbe in unterschiedlichen Ebenen ermöglicht; und
wobei
die flexible Membran (207) aus elastischem Material hergestellt und derart gefertigt ist, dass sie eine dreidimensionale Kontur aufweist, um die starre Struktur ohne Verwendung eines Befestigungselements oder eines Verriegelungsmechanismus vorgespannt in einer Ausgangsform zu halten; und
die flexible Membran (207) ferner die starre Struktur und mindestens eines der Elemente der Möbelbaugruppe umschließt, um ein einziges integriertes Teil der Möbelbaugruppe zu bilden;
eine von der flexiblen Membran (207) umhüllte flexible Rohranordnung (204/205), die in einer Ausgangsform ausgebildet ist, um das Einführen des ersten und des zweiten Stabs (202/203) der starren Struktur darin zu ermöglichen; und
der erste Stab mit einem der Elemente der Möbelbaugruppe verbunden ist und die flexible Membran mit einem anderen der Elemente der Möbelbaugruppe verbunden ist, so dass die verbundenen Elemente relativ zueinander um das Scharnier drehbar, schwenkbar oder bewegbar sind; oder der erste Stab mit einem der Elemente der Möbelbaugruppe verbunden ist und die flexible Membran mit dem Hauptkörper der Möbelbaugruppe verbunden ist, so dass das verbundene Element relativ zum Hauptkörper der Möbelbaugruppe um das Scharnier drehbar, schwenkbar oder bewegbar ist.

2. Umwandelbares Möbel nach Anspruch 1,
wobei das Scharnier (201) als Federscharnier fungiert, um das Scharnier sowie den ersten Stab (202) und den zweiten Stab (203) bei Fehlen einer aufgebrachten Kraft in die Ausgangsform zurückzuführen.

3. Umwandelbares Möbel nach Anspruch 2,
wobei der erste und der zweite Stab in Kreuzform angeordnet sind.

4. Umwandelbares Möbel nach Anspruch 2,
wobei der erste und der zweite Stab in V-Form angeordnet sind.

5. Umwandelbares Möbel nach Anspruch 2,
wobei der erste und der zweite Stab in T- oder Y-Form angeordnet sind.

6. Umwandelbares Möbel nach Anspruch 2,
wobei die starre Struktur ferner einen dritten Stab aufweist und die drei Stäbe in Form eines dreizackigen Sterns angeordnet sind.

7. Umwandelbares Möbel nach Anspruch 2,
wobei die starre Struktur ferner einen dritten und einen vierten Stab aufweist und die vier Stäbe in Form eines vierzackigen Sterns angeordnet sind.

## Revendications

1. Meuble transformable comprenant une charnière (201) et un ensemble formant meuble, dans lequel la charnière (201) est configurée pour relier de manière articulée un élément de l'ensemble formant meuble à un ou plusieurs éléments ou à un corps principal de l'ensemble formant meuble, et la charnière comprenant :
une structure rigide comprenant au moins une première tige (202) et une deuxième tige juxtaposée (203), dans lequel chacune des tiges sert de bras articulé et dans lequel les première et deuxième tiges sont positionnées pour se toucher au niveau d'une intersection de tiges, et pouvant tourner l'une par rapport à l'autre au niveau du point d'intersection ou de rencontre de tiges ;
une membrane flexible (207) configurée pour envelopper étroitement la structure rigide comprenant les première et deuxième tiges et le point d'intersection ou de rencontre de tiges, la membrane flexible maintenant les première et deuxième tiges juxtaposées et permettant :
une première rotation latérale des tiges l'une par rapport à l'autre autour du point d'intersection ou de rencontre de tiges dans un même plan, et
une seconde rotation latérale des tiges l'une par rapport à l'autre autour du point d'intersection ou de rencontre de tiges dans des plans différents ; et
dans lequel
la membrane flexible (207) est constituée d'un matériau élastique et est fabriquée pour avoir un contour tridimensionnel permettant de maintenir par sollicitation la structure rigide dans une forme par défaut sans utilisation de quelconque accessoire de fixation ou de mécanisme de verrouillage ; et
la membrane flexible (207) enferme en outre la structure rigide et au moins l'un des éléments de l'ensemble formant meuble pour former une unique pièce intégrée de l'ensemble formant meuble ;
un conduit flexible (204/205) enveloppé à l'intérieur de la membrane flexible (207) et configuré dans une forme par défaut pour permettre une introduction, en son sein, des première et deuxième tiges (202/203) de la structure rigide ; et
la première tige est reliée à un des éléments de l'ensemble formant meuble et la membrane flexible est reliée à un autre des éléments de l'ensemble formant meuble de sorte que les éléments reliés puissent tourner, pivoter, ou être mobiles l'un par rapport à l'autre autour de la charnière ; ou la première tige est reliée à un des éléments de l'ensemble formant meuble et la membrane flexible est reliée au corps principal de l'ensemble formant meuble de sorte que l'élément relié puisse tourner, pivoter, ou être mobile par rapport au corps principal de l'ensemble formant meuble autour de la charnière.

2. Meuble transformable selon la revendication 1,
dans lequel la charnière (201) sert de charnière à ressort pour ramener la charnière ainsi que la première tige (202) et la deuxième tige (203) dans la forme par défaut en l'absence d'une force appliquée.

3. Meuble transformable selon la revendication 2,
dans lequel les première et deuxième tiges sont disposées en une forme de croix.

4. Meuble transformable selon la revendication 2,
dans lequel les première et deuxième tiges sont disposées en une forme de « V ».

5. Meuble transformable selon la revendication 2,
dans lequel les première et deuxième tiges sont disposées en une forme de « T » ou de « Y ».

6. Meuble transformable selon la revendication 2,
dans lequel la structure rigide comprend en outre une troisième tige, et les trois tiges sont disposées en une forme d'étoile à trois branches.

7. Meuble transformable selon la revendication 2,
dans lequel la structure rigide comprend en outre une troisième tige et une quatrième tige, et les quatre tiges sont disposées en une forme d'étoile à quatre branches.
